# EUROPÄISCHE PATENTSCHRIFT

(11) **EP 2 297 390 B1**
(45) Veröffentlichungstag und Bekanntmachung des Hinweises auf die Patenterteilung: **25.04.2012**
(21) Anmeldenummer: 09753538.9
(22) Anmeldetag: 27.05.2009
(51) Int. Cl.: D05B 71/00, F16N 7/32, F16N 19/00

(54) **EINWECHSELAGGREGAT MIT EINEM KLEINMENGENSCHMIERMITTELSPENDER**
CHANGEOUT ASSEMBLY HAVING A SMALL-QUANTITY LUBRICANT DISPENSER
ORGANE INTERCHANGEABLE MUNI D'UN DISTRIBUTEUR DE LUBRIFIANT EN PETITES QUANTITÉS

(30) Priorität: 27.05.2008 DE 102008025257
(43) Veröffentlichungstag der Anmeldung: 23.03.2011
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2009/000725
(87) Internationale Veröffentlichungsnummer: WO 2009/143822

(56) Entgegenhaltungen:
- WO-A-2008/064651
- DE-U1- 9 417 091
- US-A- 2 857 981
- US-A- 2 995 213
- US-A- 4 895 222
- US-A- 5 197 569
- US-A- 5 570 868

## Beschreibung

Die Erfindung betrifft ein Einwechselaggregat mit einem an- oder eingebauten Kleinmengenschmiermittelspender, wobei das Einwechselaggregat einen Schmiermittelbedarf an mindestens einem Getriebe und/oder an mindestens einer Arbeitsfuge aufweist.

Die WO 2008/06451 A1 beschreibt ein Einwechselaggregat mit einem an- oder eingebauten Kleinmengenschmiermittelspender, das einen Schmiermittelbedarf an mindestens einem Getriebe und/oder an mindestens einer Arbeitsfuge aufweist. Dabei hat der Kleinmengenschmiermittelspender einen Schmiermittelbehälter mit mindestens einer Entlüftungsöffnung und mindestens einer Schmiermittelabgabeöffnung hat. Am Kleinmengenschmiermittelspender sind zur Abgabe von Schmiermittel mindestens eine Schmiermittelabgabeöffnung und mindestens eine Entlüftungsöffnung gesteuert oder geregelt pneumatisch öffenbar.

Aus der DE 29 28 077 C2 ist eine Nähmaschine mit Kleinmengenöler bekannt. Der Schmiermittelbehälter dieses Ölers hat allerdings eine unverschließbare Schmiermittelabgabeöffnung und eine immer offene Entlüftungsbohrung, so dass bei einer Lageveränderung der Nähmaschine das Öl auslaufen kann.

Der vorliegenden Erfindung liegt das Problem zugrunde, ein Einwechselaggregat mit einem an- oder eingebauten Kleinmengenschmiermittelspender zu entwickeln, der über Wochen oder Monate Teile des Einwechselaggregats - ohne Schmiermittelverlust im ausgewechselten Zustand - diskontinuierlich zu schmieren vermag.

Das Problem wird mit den Merkmalen des Anspruchs 1 gelöst. Dazu hat der Kleinmengenschmiermittelspender einen Schmiermittelbehälter mit mindestens einer Be- und/oder Entlüftungsöffnung und mindestens einer Schmiermittelabgabeöffnung. Am Kleinmengenschmiermittelspender sind zur Abgabe von Schmiermittel mindestens eine Schmiermittelabgabeöffnung und mindestens eine Be- und/oder Entlüftungsöffnung gesteuert oder geregelt pneumatisch öffenbar. In einer der Schmiermittelabgabeöffnung nachgeordneten Bohrung ist ein Ventilschieber angeordnet ist, der eine Ausnehmung zur Aufnahme einer Kleinölmenge aufweist.

Mit der Erfindung wird ein Einwechselaggregat mit einem an- oder eingebauten Kleinmengenschmiermittelspender geschaffen, das eine Lebensdauer hat, die weit über der von einmalgeschmierten Einwechselaggregaten liegt. Das bedingt der adaptierte oder integrierte Kleinmengenschmiermittelspender. Über ihn wird z.B. pro Einwechselvorgang des Aggregats eine kleine Schmierstoffmenge in das Aggregatsinnere gefördert. Dort versorgt der Spender beispielsweise ein Getriebe oder eine Arbeitsfuge, z.B. eine Geradführung, ein Wälzlager oder ein Gleitlager, zumindest kurzfristig mit einer kleinen, volumetrisch dosierbaren Schmierstoffmenge. Der Schmierstoff kann hierbei ein dünn- bis zähflüssiger Schmierstoff, z.B. Öl oder Getriebeöl sein.

Nach Abschluss des aggregateseitigen Bearbeitungsvorgangs wird das Einwechselaggregat wieder in einem Werkzeugmagazin abgelegt. Während des Ein- und Auswechselvorgangs, sowie während der Lagerung im Werkzeugmagazin, ist der Schmiermittelbehälter des Kleinmengenschmiermittelspenders - unabhängig von der Lage des Aggregats - dauerhaft schmiermitteldicht verschlossen. Anstelle des Schmiervorganges pro Aggregatseinwechselung, kann das Aggregat auch während kürzerer Bearbeitungsvorgänge signalgesteuert in programmierbaren Zeitabständen z.B. alle 0,5 bis 2 Minuten geschmiert werden. Bei einem Dauereinsatz des Aggregats ist es auch denkbar, das Schmiermittel ca. alle fünf Minuten zuzuführen.

Weitere Einzelheiten der Erfindung ergeben sich aus den Unteransprüchen und der nachfolgenden Beschreibung einer schematisch dargestellten Ausführungsform.
- Figur 1:: Seitenansicht eines vierspindeligen Einwechselaggregats mit Kleinmengenschmiermittelspender;
- Figur 2:: Perspektivische Ansicht eines teilgeschnittenen zweispindeligen Einwechselaggregats;
- Figur 3:: Vollschnittansicht zu Figur 2;
- Figur 4:: Perspektivische Ansicht eines Kleinmengenölersvon vorn;
- Figur 5:: Perspektivische Ansicht eines Kleinmengenölersvon der Rückseite;
- Figur 6:: Längsschnitt B-B zu Figur 8;
- Figur 7:: Teilquerschnitt E-E zu Figur 6;
- Figur 8:: Schnittverläufe durch den Kleinmengenöler;
- Figur 9:: Längsschnitt B-B zu Figur 8, jedoch mit Druckluft beaufschlagt;
- Figur 10:: Längsschnitt F-F zu Figur 6;
- Figur 11:: Querschnitt C-C zu Figur 8;
- Figur 12:: Ausschnittsvergrößerung X zu Figur 9;
- Figur 13:: Querschnitt G-G zu Figur 12.

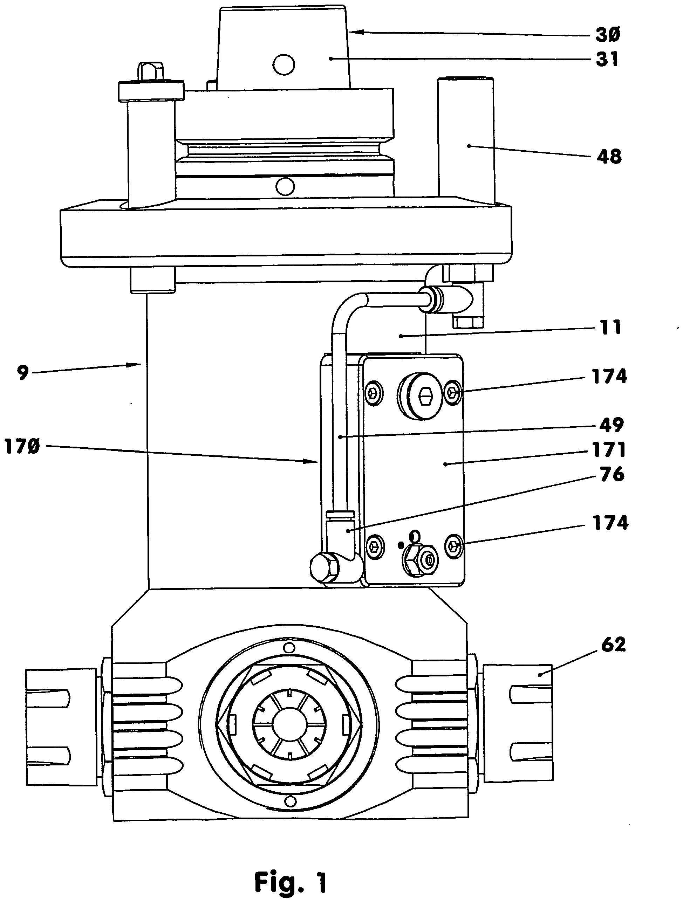

Die Figur 1 zeigt ein einwechselbares vierspindeliges Zerspanaggregat (9) mit einem Kleinmengenschmiermittelspender. Letzterer ist hier beispielsweise ein Kleinmengenöler (170).

Das Zerspanaggregat (9) nach Figur 1 ist ein einwechselbarer Werkzeugträger mit vier Spannzangen (61). Die Spannzangen (61) sitzen in Werkzeugspindeln, die über ein Getriebe und eine Antriebsspindel (30) von der das Zerspanaggregat (9) tragenden Werkzeugmaschine angetrieben werden. Das Zerspanaggregat (9) steht dazu mit der Werkzeugmaschine über einen Kegeladapter (31) und mindestens einen Druckluftadapter (48) in Verbindung. Der Druckluftadapter (48) ist mit dem Kleinmengenöler (70) mittels einer Pneumatikleitung (49) pneumatisch verbunden.

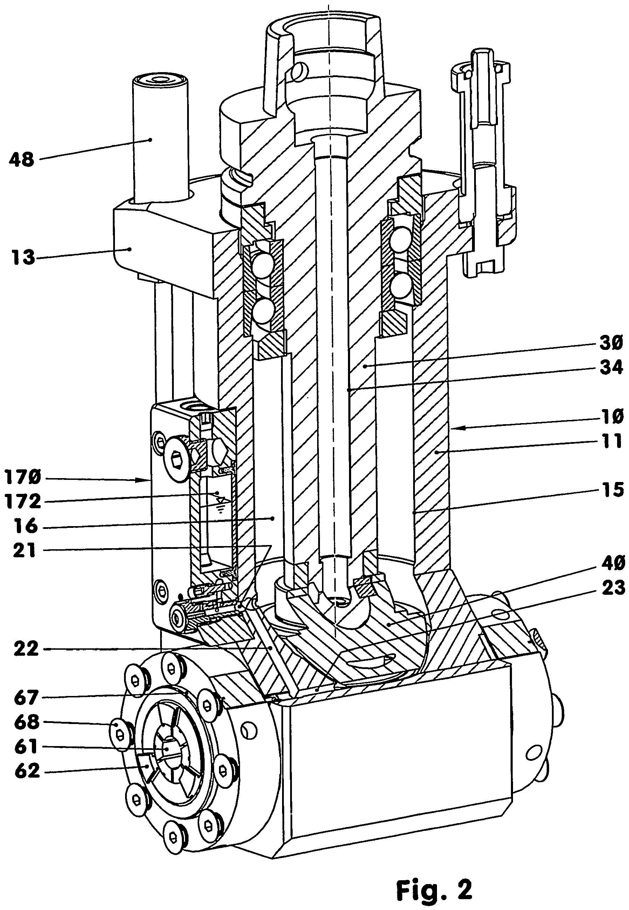

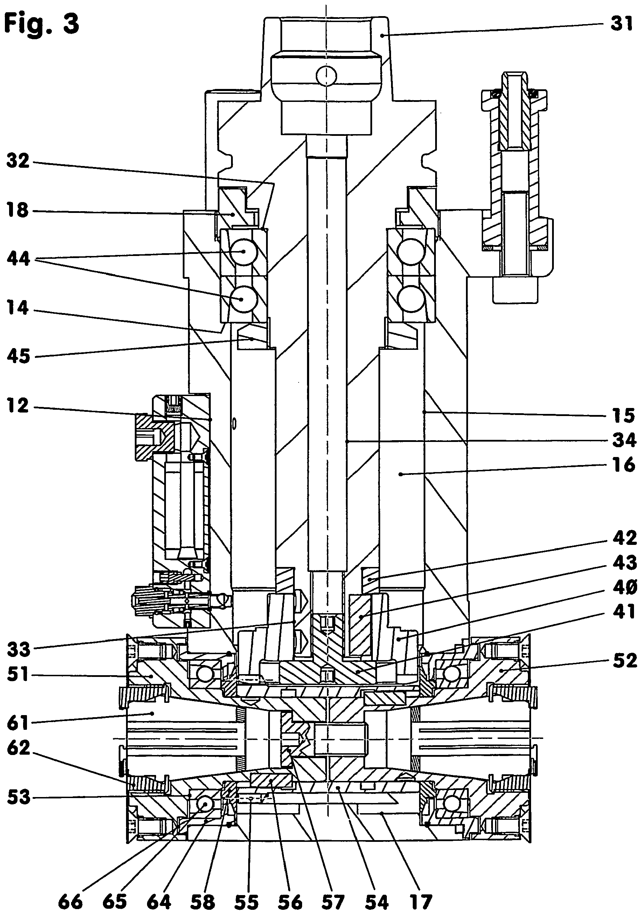

In Figur 2 ist ein zweispindeliges Zerspanaggregat (10) in einem Teilschnitt dargestellt. Der Teilschnitt lässt die Funktion des Ölens mittels eines Kleinmengenölers (170) erkennen, vgl. auch Figur 3.

Das Zerspanaggregat (10) hat z.B. ein rohrförmiges Aggregategehäuse (11), das zur Werkzeugmaschine hin in einem Adapterflansch (13) endet. Am Adapterflansch (13) ist mindestens ein Druckluftadapter (48) befestigt.

Im z.B. einteiligen Aggregategehäuse (11) befindet sich eine vertikale, mittige Stufenbohrung (15) zur Lagerung einer Antriebsspindel (30). Diese Stufenbohrung (15) wird im Bereich des unteren Gehäuseendes von einer gestuften Querbohrung (17) geschnitten oder gekreuzt. Diese Querbohrung (17) nimmt die Werkzeugspindeln (51, 52) auf.

Die zentral aufgebohrte Antriebsspindel (30) hat an ihrem werkzeugmaschinenseitigen Ende einen Kegelhohlschaft (31) oder eine vergleichbare Antriebsschnittstelle. Am anderen Ende befindet sich ein zylindrischer Sitz (33) zur Aufnahme eines Planrades (40). Als formschlüssige Wellen-Naben-Verbindung wird dort zwischen der Antriebsspindel (30) und dem Planrad (40) eine Passfeder (43) verwendet. Das Planrad (40) ist auf dem Sitz (33) mittels einer Sonderschraube (41) fixiert, die in das hintere Ende der Bohrung (34) eingeschraubt ist.

Zwischen dem Kegelhohlschaft (31) und dem zylindrischen Sitz (33) sind in O-Anordnung zwei Schrägkugellager (44) auf der Antriebsspindel (30) angeordnet. Sie sitzen axial fixiert zwischen einem Wellenbund (32) und einer Wellenmutter (45).

In der Stufenbohrung (15) sitzen die Schrägkugellager (44) vorgespannt zwischen einem Gehäusebund (14) und einer Gehäusemutter (18).

In der Querbohrung (17) sind zwei z.B. im Wesentlichen baugleiche Werkzeugspindeln (51, 52) koaxial nebeneinander gelagert. Jede Spindel (51, 52) sitzt über ein jeweils in einer Flanschhülse (64) angeordnetes Schrägkugellager (65) in der Querbohrung (17). Die Werkzeugspindeln (51, 52) sind zum einen über eine Hülse (54) und zum anderen über eine zentrale Schraube (57) miteinander starr verbunden. Jede Spindel (51, 52) sitzt über eine separate Passfeder (56) verdrehstarr in der Hülse (54).

Auf der einzelnen Werkzeugspindel (51, 52) ist das jeweilige Schrägkugellager (65) axial fixiert zwischen einem Wellenbund (53) und der Hülse (54) angeordnet. Zwischen dem einzelnen Schrägkugellager (65) und der Hülse (54) ist zusätzlich ein Schleuderring (58) platziert. Die Hülse (54) weist an ihrem linken Ende an der zylindrischen Außenkontur eine Stirnradverzahnung (55) auf. Hierbei bildet die Hülse (54) zusammen mit dem Planrad (40) ein Winkelgetriebe mit sich schneidenden Achsen. Das einen Schmiermittelbedarf aufweisende Getriebe hat eine Übersetzung von 1:1,2 ins Schnelle. Die maximale Abtriebsdrehzahl liegt beispielsweise bei 15000 Umdrehungen pro Minute.

Die u.a. außen am Aggregategehäuse (11) anliegenden Flanschhülsen (64) werden großteils vom freien äußeren Ende der Werkzeugspindeln (51, 52) umgriffen. Der Spaltraum (66) des Umgriff ist hierbei als Labyrinthdichtung gestaltet.

In der konischen Bohrung jeder Werkzeugspindel (51, 52) sitzt eine Spannzange (61). Letztere wird dort über eine - das einzusetzende Werkzeug spannende - Gewindespannmutter (62) gehalten. Um die Gewindespannmutter (62) herum befindet sich ein Spindelbund (67) und z.B. acht Senkschrauben (68). Dort kann z.B. eine Kreissägescheibe zentriert und befestigt werden.

Nach Figur 2 sitzt seitlich längsgeschnitten am Aggregategehäuse (11) der aus der DE 10 2006 056 257 A1 bekannte Kleinmengenöler (170). Er hat ein z.B. quaderförmiges, transparentes Gehäuse (171), das an einer beispielsweise ebenen Adapterfläche (12) des Aggregategehäuses (11) mit Hilfe der vier Schrauben (174) adaptiert ist. Das Gehäuse (171) ist mittels einer Pneumatikleitung (49) am Druckluftadapter (48) angeschlossen, vgl. auch Figur 1.

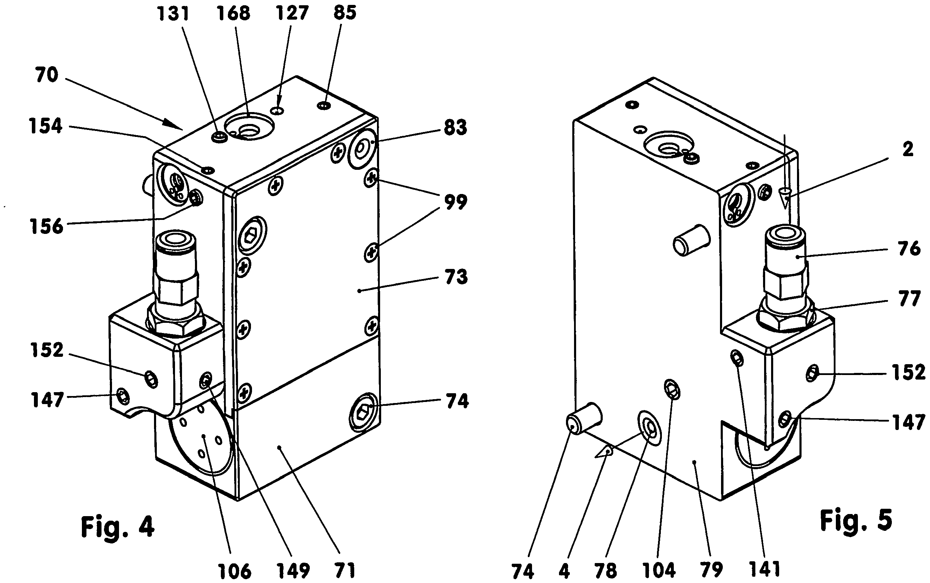

Der aus den Figuren 1 bis 3 bekannte Kleinmengenöler (170) wird in den Figuren 4 bis 13 durch den Kleinmengenöler (70) ersetzt.

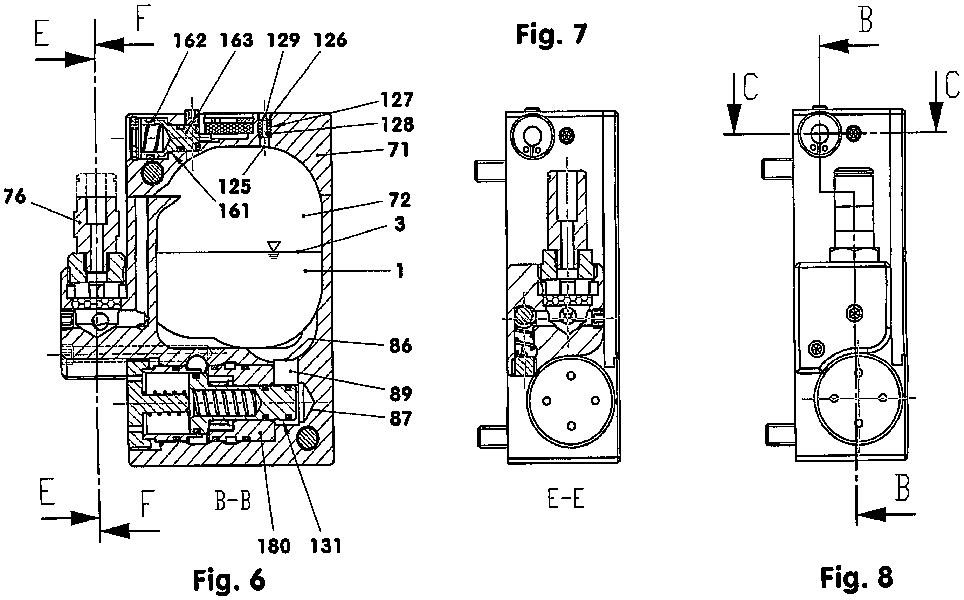

Figur 6 zeigt einen vertikalen Längsschnitt durch das Gehäuse (71) des Kleinmengenölers (70). Im Zentrum des Gehäuses (71) befindet sich ein zumindest annähernd quaderförmiger Hohlraum (72), der als Schmiermittelbehälter dient. Er ist mittels eines Deckels (73) mit Hilfe von acht Schrauben (99) verschlossen, vgl. Figur 4. Der Deckel (73), z.B. ein planer, rechteckiger und transparenter Kunststoffdeckel, sitzt auf der Vorderseite des Gehäuses (71), also der Seite, die der Adapterfläche (12) des Aggregategehäuses (11) abgewandt ist.

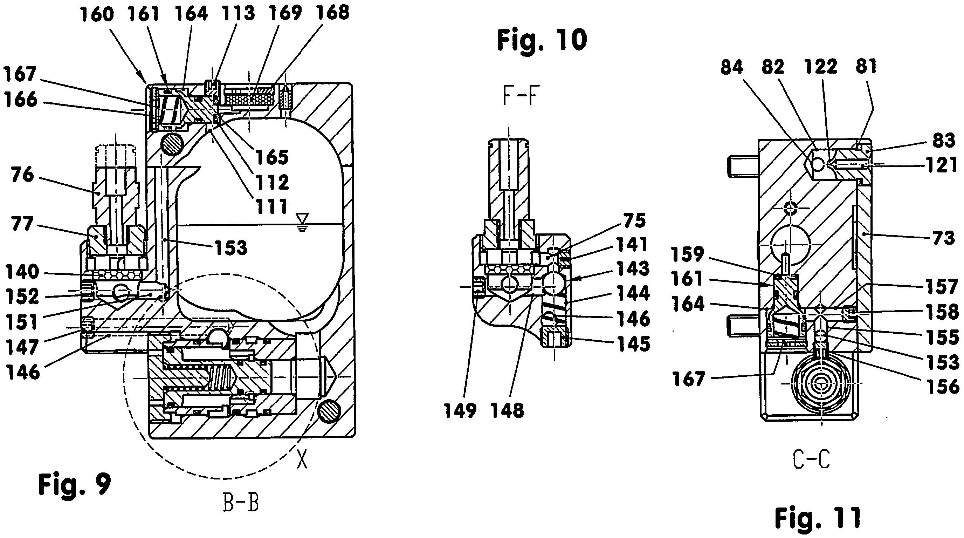

Der Schmiermittelbehälter hat z.B. vier Öffnungen. Die erste Öffnung ist eine oberhalb des Hohlraums (72) angeordnete Befüllöffnung (81), vgl. Figur 11. Sie ist hier durch einen Gummistopfen (83) verschlossen. Der Gummistopfen (83), der z.B. eine Befüllbohrung (121) und eine selbstverschließende elastische, z.B ringförmige, Dichtlippe (122) aufweist, sitzt in einer Bohrung (82), die von oben her mit dem Hohlraum (72) über eine Bohrung (84) in Verbindung steht. Die Bohrung (84) ist durch einen Gewindestopfen (85) dicht verschlossen, vgl. Figur 4.

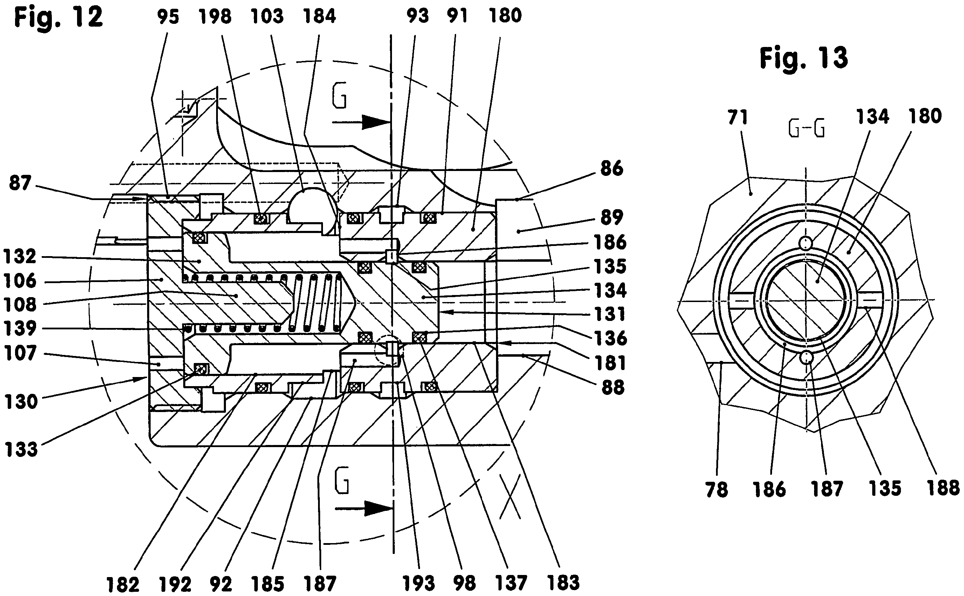

Die zweite Öffnung ist eine Schmiermittelabgabeöffnung (86), vgl. Figur 6. Letztere ist Teil eines Kanals (89), der in eine Stufenbohrung (87) mündet, in der ein Ventilschieber (131) in einer Einsatzhülse (180) gelagert ist. Die Stufenbohrung (87), vgl. Figur 12, hat dabei einen Zulaufabschnitt (88), einen Zylinderabschnitt (91) und einen Verschlussabschnitt (95) mit Innengewinde. Der Zulaufabschnitt (88) schneidet den Kanal (89). In der Wandung des anschließenden Zylinderabschnittes (91) befinden sich nebeneinander eine Zuluftinnennut (92) und eine Ölnebelinnennut (93). Die vier Ränder dieser Nuten (92, 93) sind angefast. In die Zuluftinnennut (92) mündet eine Zulaufquerbohrung (103), die an der Gehäuserückseite (79) mit einem Gewindestopfen (104) verschlossen ist. Die Ölnebelinnennut (93) wird von der Gehäuserückseite (79) her von einer Gemischaustrittsbohrung (78) geschnitten. Die Gemischaustrittsbohrung (78) weist auf der Gehäuserückseite (79) eine Senkung auf, in der - gegenüber der Adapterfläche (12) - ein abdichtender O-Ring angeordnet ist, vgl. Figur 5.

Im Zylinderabschnitt (91) sitzt eine Einsatzhülse (180), vgl. auch Figur 12. Letztere ist zwischen einem im Verschlussabschnitt (95) eingeschraubten Schraubdeckel (106) und dem bundseitigen hinteren Ende des Zylinderabschnitts (91) eingeklemmt. Die Außenwandung der Einsatzhülse (180) weist drei kleinere und zwei größere Ringnuten auf. Die beiden größeren Ringnuten sind die Zuluftaußennut (192) und eine Ölnebelaußennut (193), wobei die erste Nut (192) gegenüber der gehäuseseitigen Zuluftinnennut (92) und die zweite Nut (193) gegenüber der gehäuseseitigen Ölnebelinnennut (93) liegt. In den kleineren Ringnuten liegen Dichtringe (198). Der erste Dichtring (198) liegt links von der Zuluftaußennut (192), der dritte liegt rechts von der Ölnebelaußennut (193) und der zweite liegt zwischen den Nuten (192) und (193).

Die Einsatzhülse (180) hat eine aus einem Kolbenabschnitt (182) und einem Dosierabschnitt (183) bestehende zentrale Stufenbohrung (181). Der Dosierabschnitt (183) hat einen kleineren Durchmesser als der Kolbenabschnitt (182). Als Übergang zwischen den Abschnitten (182) und (183) wird ein planer Bund (184) verwendet. In der Stufenbohrung (181) ist der aus einem Kolben (132) und einer Kolbenstange (134) bestehende Ventilschieber (131) gelagert. Die Einsatzhülse (180) und der Ventilschieber (131) bilden ein Gemischventil (130).

Der Kolbenabschnitt (182) hat eine glatte zylindrische Wandung zur Führung des Kolbens (132). In der Nähe des Bundes (184) befinden sich im Kolbenabschnitt (182) mehrere radiale Durchbrüche (185), z.B. in Schlitzform, die die Stufenbohrung (181) mit der Zuluftaußennut (192) verbinden.

Im mittleren Bereich des Dosierabschnittes (183) ist eine kanalartige Gemischnut (186) eingearbeitet. In die Gemischnut (186) münden mehrere, z.B. zwei, Ausblasbohrungen (187), die vom Bund (184) aus - jeweils parallel zur Mittellinie der Stufenbohrung (181) gebohrt sind. Zwischen den Ausblasbohrungen (187) befinden sich beispielsweise radiale Bohrungen (188), die die Gemischnut (186) mit der Ölnebelaußennut (193) verbinden.

Der Kolben (132) ist im Kolbenabschnitt (182) gasdicht geführt. Er hat dazu eine Kolbendichtung (133). Die kolbenstangenseitige Stirnfläche des Kolbens (132) ist bereichsweise - zur Förderung der kolbenstangenseitigen Belüftung - als Kegelstumpfmantel ausgeführt. Der Kegelwinkel beträgt 150 Winkelgrade. Die Spitze des gedachten Kegels liegt im Bereich der Kolbenstange (134). Die Kolbenstange (134) hat im Bereich ihres freien Endes zwischen zwei Dichtringe (137) aufnehmende Dichtringnuten (136) eine umlaufende Dosiernut (135). Die Dosiernut (135) dient als Ausnehmung zur Aufnahme einer Kleinölmenge. Im Ausführungsbeispiel kann sie zur volumetrischen Dosierung eine Kleinölmenge von 2 mm³ aufnehmen. Die Dosiernut (135) hat beispielsweise einen rechteckigen Querschnitt. Der Ventilschieber (131) ist von der Kolbenbodenseite her zur Aufnahme einer Rückholfeder (139) bis zu der ersten Dichtringnut (136) aufgebohrt.

Nach den Figuren 9 und 12 liegt der Ventilschieber (131) am Schraubdeckel (106) an. Im Bereich der Anlage hat der Schraubdeckel (106) z.B. vier mittellinienparallele Bohrungen (107), die u.a. der Ent- und Belüftung des kolbenbodenseitigen Raumes der Einsatzhülse (180) dienen, vgl. u.a. Figur 7. Zentral weist der Schraubdeckel (106) beispielsweise einen Federführungsbolzen (108) auf. Am Schraubdeckel (106) stützt sich die Rückholfeder (139) ab.

Die Zulaufquerbohrung (103) wird im Bedarfsfall über das Anschlussstück (76) mit Druckluft versorgt, vgl. Figur 9. Dazu ist das Anschlussstück (76) über einen Filterhalter (77) in das Gehäuse (71) eingeschraubt. Der Filterhalter (77) fixiert über mehrere Füße einen Luftfilter (140). Der strömungstechnisch vor dem Luftfilter (140) gelegene Raum mündet in eine Notzuluftbohrung (75), die über einen Gewindestopfen (141) verschlossen ist. Die Notzuluftbohrung (75) wird geschnitten von einer Ventilbohrung (144), in der ein Bypassventil (143) angeordnet ist. Das Bypassventil (143) besteht z.B. aus einer Kugel und einer Ventilfeder. Letztere stützt sich an einem Gewindestopfen (145) ab und drückt die Kugel so gegen einen Ventilsitz, dass diese erst bei einem in der Notzuluftbohrung (75) herrschenden Staudruck von mindestens 2 x 10⁵ Pa als Bypass für einen verstopften Luftfilter (140) öffnet.

Unterhalb des Luftfilters (140), also strömungstechnisch nach dem Luftfilter (140), befinden sich eine erste (148) und eine zweite Verteilerbohrung (151), vgl. Figuren 9 und 10. Beide Bohrungen (148) und (151) durchdringen sich zumindest annähernd senkrecht, wobei der Kreuzungspunkt fast mittig unterhalb des Luftfilters (140) liegt. Die erste Verteilerbohrung (148) mündet in die Ventilbohrung (144) in der Höhe der Ventilkugel. Die Bohrung (148) ist einseitig verschlossen durch einen Gewindestopfen (149). Die zweite Verteilerbohrung (151) mündet in eine zu einem Belüftungsventil (160) führende Nebenzulaufbohrung (153). Letztere endet vor einem Gewindestopfen (154), vgl. Figur 4. Auch die Verteilerbohrung (151) ist einseitig mit einem Gewindestopfen (152) verschlossen.

Unterhalb der Ventilkugel des Bypassventils (143), vgl. Figur 10, kreuzt sich die Ventilbohrung (144) mit einer Hauptzulaufbohrung (146). Letztere mündet in die Zulaufquerbohrung (103). Die Hauptzulaufbohrung (146) ist gegenüber der Umgebung mit einem Gewindestopfen (147) abgedichtet.

Die dritte Öffnung ist eine Belüftungsöffnung (111), vgl. Figur 9. Sie ist im oberen Bereich des Gehäuses (71) angeordnet. Sie ist Teil einer Belüftungsbohrung (112), die an der Oberseite des Gehäuses (71) in einem Gewinde endet. Dort ist sie mit einem Gewindestopfen (113) verschlossen. Die Belüftungsbohrung (112) wird gekreuzt von einer Stufenbohrung (164), die zu einem pneumatisch betätigbaren Belüftungsventil (160) gehört. In der Stufenbohrung (164) ist ein Kolbenschieber (161) geführt und gelagert.

In den vorderen Bereich der Stufenbohrung (164) mündet, kurz vor dem mittleren Bereich, eine - zum Deckel (73) hin mit einem Gewindestopfen (158) verschlossene - zweite, obere Querbohrung (157), vgl. Figur 11. Letztere steht pneumatisch über eine erste, obere Querbohrung (155) mit der Nebenzulaufbohrung (153) in Verbindung. Die Querbohrung (155) ist mit einem Gewindestopfen (156) gegen die Umgebung verschlossen.

Die Stufenbohrung (164) des Belüftungsventils (160) endet mit ihrem hinteren Bereich in einer - von der Gehäuseoberseite aus - in das Gehäuse (71) eingearbeitete Filterbohrung (168). In der gestuften Filterbohrung (168) sitzt ein Luftfilter (169), gehalten von einem Sicherungsring. Die Kreuzungsstelle von der Stufenbohrung (164) und der Filterbohrung (168) ist gegenüber dem Luftfilter (169) zum Zentrum des Gehäuses (71) hin versetzt angeordnet.

Der Kolbenschieber (161) hat einen Kolben (162) und eine Kolbenstange (163), vgl. Figur 6. Dabei bewegt sich der Kolben (162) im vorderen Bereich der Stufenbohrung (164), während die Kolbenstange (163) vorwiegend im mittleren Bereich der Stufenbohrung (164) sitzt. An seiner Kolbenbodenseite weist der Kolben (162) eine Bohrung auf, in der eine Rückholfeder (166) angeordnet ist. Die Rückholfeder (166) stützt sich gehäuseseitig an einer Lochscheibe (167) ab, die mittels eines Sicherungsringes gehalten wird.

Der Kolben (162) ist zur Lochscheibe (167) hin mit einem radialen Dichtring gegenüber der Stufenbohrung (164) abgedichtet. Die Kolbenstange (163) trägt in zwei Ringnuten einen radialen und einen axialen Dichtring. Der radiale Dichtring verhindert, dass über die zweite, obere Querbohrung (157) einströmende Druckluft in den Bereich der Belüftungsbohrung (112) gelangt. Der axiale Dichtring (159) sitzt in der Kolbenstange (163) in einer axialen Stirnnut. Dieser Dichtring (159) liegt bei geschlossenem Belüftungsventil (160) unter der Wirkung der Rückstellfeder (166) an einer Bundfläche (165) der Stufenbohrung (164) gas- und öldicht an, vgl. Figur 6.

Die vierte Öffnung ist eine Entlüftungsöffnung (125), vgl. Figur 6. Sie ist neben der Belüftungsbohrung (112) angeordnet und gehört zu einer Entlüftungsbohrung (126), die den Hohlraum (72) mit der Oberseite des Gehäuses (71) verbindet. In der Entlüftungsbohrung (126) ist ein Entlüftungsventil (127) angeordnet. Der Gummikörper des Entlüftungsventils (127) hat eine Ventilbohrung (128), die durch eine z.B. ringförmige, elastische Dichtlippe (129) öffenbar verschlossen ist. Beispielsweise öffnet das Entlüftungsventil (127) ab einem Überdruck des Hohlraums (72) von 1 x 10⁵ Pa. Der Überdruck entweicht dann in die Umgebung. Ggf. kann auch ein Entlüftungsventil verwendet werden, das sich im Aufbau vom Bypassventil (143) kaum unterscheidet.

Der Kleinmengenöler (70) sitzt in der Regel inaktiv am Einwechselaggregat (9, 10), das entweder im Einsatz ist oder im Magazin der Werkzeugmaschine geparkt ist. Sein Ventilschieber (131) und sein Kolbenschieber (161) stehen jeweils in Schließstellung, vgl. Figur 6. Soll nun z.B. das Winkelgetriebe (40, 55) des Zerspanaggregats (10) - dargestellt in den Figuren 2 und 3 - geschmiert werden, so wird die Pneumatikleitung (49) über den Druckluftadapter (48) mit Druckluft beaufschlagt. Die Druckluft (2) gelangt - bei freiem Luftfilter (140) - über das Anschlussstück (76) in die erste (148) und zweite Verteilerbohrung (151), vgl. Figuren 9 und 10. Von dort aus strömt sie, am Bypassventil (143) vorbei, zum einen vor das Gemischventil (130) und zum anderen vor das Belüftungsventil (160), vgl. Figur 9.

In ersten Fall strömt die Druckluft über die Bohrungen (148, 144, 146, 103) in die Zuluftaußennut (192) und von da über die Durchbrüche (185) gegen die Kolbenstangenseite des Kolbens (132), wodurch sich der Ventilschieber (131) nach links bewegt. Unter einem Komprimieren der Rückholfeder (139) legt sich der Kolben (132) am Schraubdeckel (106) an. Dabei zieht er die mit Getriebeöl (1) beladene Dosiernut (135) in die Stufenbohrung (181) hinein, bis die Dosiernut (135) zumindest annähernd deckungsgleich vor der Gemischnut (186) zur Anlage kommt. Über die Ausblasbohrungen (187) wird das Getriebeöl (1) sofort in die Gemischnut (186) gespült und von dort aus zu einem Gas-Öl-Gemisch vernebelt über die Radialbohrungen (188), die Ölnebelinnennut (93) und die Ölnebelaußennut (193) in die Gemischaustrittsbohrung (78) geblasen. Dabei wird nur die Kleinölmenge transportiert, die in der Dosiernut (135) enthalten war.

Das Gas-Öl-Gemisch gelangt - nach Figur 2 - über eine z.B. radiale Gehäusebohrung (21) in den Innenraum (16) des Aggregategehäuses (11). Dort endet die Gehäusebohrung (21) nur mit einem Teil ihres Querschnitts. In die Gehäusebohrung (21) ragt eine schräg nach unten führende Bohrung (22) hinein, die in eine Horizontalbohrung (23) übergeht. Die Horizontalbohrung (23) endet im Bereich der Planradverzahnung. Der dort durch die Planradrotation herrschende Unterdruck erzeugt zusätzlich einen das Gas-Öl-Gemisch ansaugenden Sog. Somit wird die Verzahnung optimal benebelt. Um das Einblasen des Gas-Öl-Gemischs verlustarm zu ermöglichen, ist der Innenraum (16) gegenüber der Umgebung z.B. durch mindestens eine spezielle Bohrung oder durch Labyrinthdichtungen entlüftbar.

Das über die Gehäusebohrung (21) direkt in den Innenraum (16) zerstäubte Öl (1) gelangt zudem in den Schleuderbereich der darunter liegenden Schleuderscheibe (58), vgl. Figur 3. Letztere fördert durch ihre Rotation zusätzlich die Ölvernebelung.

Zeitgleich zum ersten Schritt wird im Kleinmengenöler (70) in einem zweiten Schritt das Belüftungsventil (160) über die Bohrungen (151, 153, 155, 157) betätigt. Auch hier strömt Druckluft auf die Kolbenstangenseite des Kolbens (162), um diesen gegen die Wirkung der Rückstellfeder (166) in Figur 9 nach links zu verschieben. Hierbei hebt die Kolbenstange (163) mit ihrer axialen Dichtung (159) von der Bundfläche (165) ab, um so Umgebungsluft über den Luftfilter (169) und die Belüftungsbohrung (112) strömen zu lassen. Schließlich muss für das - durch das Zurückweichen des Ventilschiebers (131) - in den Kanal (89) nachfließende Getriebeöl (1) druckfrei Umgebungsluft nachströmen können, um den Öffnungshub des Ventilschiebers (131) nicht zu behindern.

Nach dem Ausblasen des Getriebeöls (1) wird die Druckluftzufuhr für die Druckluftleitung (49) unterbrochen. Die Rückstellfedern (139) und (166) bringen die Ventilglieder (131) und (161) wieder in ihre Schließstellung bzw. Ausgangslage, vgl. Figur 6, wodurch die Öffnungen (86) und (111) öldicht, also auslaufsicher, verschlossen werden.

Bei der Schließbewegung des Ventilschiebers (131) wird wieder Getriebeöl (1) aus der Stufenbohrung (181) in den Schmiermittelbehälter (72) zurückverdrängt. Der dabei entstehende Überdruck baut sich durch ein kurzzeitiges Öffnen des Entlüftungsventils (127) ab. Die oberhalb des Flüssigkeitsspiegels (3) komprimierte Luft entweicht teilweise.

In der Regel werden die Ventile (130, 160) nur kurzzeitig geöffnet, um beispielsweise 2 ... 10 mm³ Getrieböl der Viskosität 65 ... 350 mm²/s abzugeben. Das Öffnen erfolgt z.B. beim Einwechseln des Zerspanaggregats (10). Bei einem 100-maligen Einwechseln pro Tag reicht der Ölvorrat des Kleinmengenölers (70) teilweise Wochen oder Monate, ohne nachzufüllen.

Die gezeigte Kombination aus Einwechselaggregat (9, 10) und Kleinmengenschmiermittelspender (70) wird in der Werkzeugmaschine nur hängend eingesetzt, d.h. der Adapterflansch (13) befindet sich oben und die Mittellinien der Werkzeugspindeln (51, 52) liegen zumindest annähernd in einer Horizontalebene, die unterhalb des Adapterflansches (13) liegt. Um nun das Einwechselaggregat in anderen Lagen mit dem Kleinmengenöler (70) verwenden zu können, kann letzterer auch schwenkbar am Aggregategehäuse (11) befestigt werden. Dazu benötigt man u.a. einen längeren Pneumatikschlauch (49) und weitere Gehäusebohrungen (21). Die nicht benötigten Gehäusebohrungen werden beim z.B. rastenden Schwenken des Ölers (70) verschlossen.

Die gezeigten Aggregate (9, 10) werden über die Werkzeugmaschine mit Druckluft versorgt. Wird z.B. im Aggregategehäuse (11) auf der schnell rotierenden Antriebsspindel (30) eine kleine Turbine angeordnet, die von einem entsprechenden Verdichtergehäuse umgeben ist, kann die Antriebsspindelrotation zur Drucklufterzeugung genutzt werden. Die sich beim Starten der Antriebsspindel (30) aufbauende Druckluft kann z.B. zu einem kurzzeitigen Betätigen des Ölers (70) benutzt werden.

Ggf. kann das Flüssigkeitsniveau (3) bzw. der Füllstand des Schmiermittelbehälters (72) mittels eines geeigneten Sensors oder Sensorsystems überwacht werden. Bei einer entsprechenden Schwellwertüberschreitung kann ein Alarmsignal ausgelöst werden. Auch ist es möglich, den Schmierstoffbehälter im Werkzeugmagazin automatisch zu befüllen.

### Bezugszeichenliste:

- 1: Schmiermittel, Öl, Getriebeöl
- 2: Druckluft
- 3: Flüssigkeitsniveau
- 4: Ölnebel
- 9: Einwechselaggregat, Zerspanaggregat, Vierspindler

- 10: Einwechselaggregat, Zerspanaggregat, Zweispindler
- 11: Aggregategehäuse
- 12: Adapterfläche
- 13: Adapterflansch
- 14: Gehäusebund
- 15: Stufenbohrung, vertikal, für (30)
- 16: Innenraum
- 17: Querbohrung, gestuft, für (51, 52)
- 18: Gehäusemutter

- 21: Gehäusebohrung
- 22: Bohrung, schräg
- 23: Horizontalbohrung

- 30: Antriebsspindel
- 31: Kegeladapter, Kegelhohlschaft
- 32: Wellenbund
- 33: Zylindersitz
- 34: Bohrung, zentral

- 40: Planrad, Getriebe
- 41: Planradschraube, Sonderschraube
- 42: Distanzring
- 43: Passfeder
- 44: Schrägkugellager
- 45: Wellenmutter
- 48: Druckluftadapter
- 49: Druckluftleitung

- 51, 52: Werkzeugspindeln, Spindeln
- 53: Wellenbund
- 54: Hülse
- 55: Stirnradverzahnung, Getriebe
- 56: Passfeder
- 57: Schraube, zentral
- 58: Schleuderscheibe

- 61: Spannzangen, Werkzeugaufnahmen
- 62: Gewindespannmutter
- 64: Flanschhülse
- 65: Schrägkugellager
- 66: Spaltraum, Labyrinthdichtung
- 67: Spindelbund
- 68: Senkschrauben

- 70: Kleinmengenschmiermittelspender, Kleinmengenöler
- 71: Gehäuse
- 72: Hohlraum, Schmiermittelbehälter, Tank
- 73: Deckel
- 74: Schrauben zum Befestigen
- 75: Notzuluftbohrung
- 76: Anschlussstück
- 77: Filterhalter
- 78: Gemischaustrittsbohrung
- 79: Gehäuserückseite

- 81: Befüllöffnung
- 82: Bohrung
- 83: Gummistopfen
- 84: Bohrung, vertikal
- 85: Gewindestopfen
- 86: Schmiermittelabgabeöffnung
- 87: Stufenbohrung für Ventilschieber (131)
- 88: Zulaufabschnitt
- 89: Kanal

- 91: Zylinderabschnitt
- 92: Zuluftinnennut
- 93: Ölnebelinnennut

- 95: Verschlussabschnitt
- 99: Deckelschrauben

- 103: Zulaufquerbohrung
- 104: Gewindestopfen
- 106: Schraubdeckel
- 107: Bohrungen
- 108: Federführungsbolzen

- 111: Belüftungsöffnung
- 112: Belüftungsbohrung
- 113: Gewindestopfen

- 121: Befüllbohrung
- 122: Dichtlippe
- 125: Entlüftungsöffnung
- 126: Entlüftungsbohrung
- 127: Entlüftungsventil
- 128: Ventilbohrung
- 129: Dichtlippe

- 130: Gemischventil
- 131: Ventilschieber
- 132: Kolben
- 133: Kolbendichtung
- 134: Kolbenstange
- 135: Dosiernut, Ausnehmung
- 136: Dichtringnuten
- 137: O-Ringe, Dichtringe

- 139: Rückholfeder

- 140: Luftfilter
- 141: Gewindestopfen

- 143: Bypassventil
- 144: Ventilbohrung
- 145: Gewindestopfen
- 146: Hauptzulaufbohrung
- 147: Gewindestopfen
- 148: erste Verteilerbohrung
- 149: Gewindestopfen

- 151: zweite Verteilerbohrung
- 152: Gewindestopfen
- 153: Nebenzulaufbohrung
- 154: Gewindestopfen
- 155: erste, obere Querbohrung
- 156: Gewindestopfen
- 157: zweite, obere Querbohrung
- 158: Gewindestopfen
- 159: Dichtring, axial

- 160: Belüftungsventil
- 161: Kolbenschieber
- 162: Kolben
- 163: Kolbenstange
- 164: Stufenbohrung
- 165: Bundfläche
- 166: Rückstellfeder
- 167: Lochscheibe
- 168: Filterbohrung
- 169: Luftfilter

- 170: Kleinmengenschmiermittelspender, Kleinmengenöler
- 171: Gehäuse
- 172: Hohlraum, Schmiermittelbehälter, Tank
- 174: Schrauben zum Befestigen

- 180: Einsatzhülse
- 181: Stufenbohrung
- 182: Kolbenabschnitt
- 183: Dosierabschnitt
- 184: Bund
- 185: Durchbrüche, Schlitze
- 186: Gemischnut
- 187: Ausblasbohrungen
- 188: Radialbohrungen

- 192: Zuluftaußennut
- 193: Ölnebelaußennut
- 198: Dichtringe

## Patentansprüche

1. Einwechselaggregat mit einem an- oder eingebauten Kleinmengenschmiermittelspender, wobei das Einwechselaggregat (9, 10) einen Schmiermittelbedarf an mindestens einem Getriebe (40, 55) und/oder an mindestens einer Arbeitsfuge aufweist, **dadurch gekennzeichnet,**
- **dass** der Kleinmengenschmiermittelspender (70) einen Schmiermittelbehälter (72) mit mindestens einer Be- und/oder Entlüftungsöffnung (111, 125) und mindestens einer Schmiermittelabgabeöffnung (86) hat,
- **dass** zur Abgabe von Schmiermittel (1) mindestens eine Schmiermittelabgabeöffnung (86) und mindestens eine Be- und/oder Entlüftungsöffnung (111, 125) gesteuert oder geregelt pneumatisch öffenbar sind, und
- **dass** in einer der Schmiermittelabgabeöffnung (86) nachgeordneten Bohrung (181) ein Ventilschieber (131) angeordnet ist, der eine Ausnehmung (135) zur Aufnahme einer Kleinölmenge aufweist.

2. Einwechselaggregat mit einem Kleinmengenschmiermittelspender gemäß Anspruch 1, **dadurch gekennzeichnet, dass** die Ausnehmung (135) des Ventilschiebers (131) eine umlaufende Nut, eine Kerbe oder eine Querbohrung ist.

3. Einwechselaggregat mit einem Kleinmengenschmiermittelspender gemäß Anspruch 1, **dadurch gekennzeichnet, dass** die Ausnehmung (135) des Ventilschiebers (131) ein Volumen von 2 bis 10 mm³ aufweist.

4. Einwechselaggregat mit einem Kleinmengenschmiermittelspender gemäß Anspruch 1, **dadurch gekennzeichnet, dass** die Entlüftungsöffnung (111) und die Schmiermittelabgabeöffnung (86) des Kleinmengenschmiermittelspenders (70) zumindest annähernd gleichzeitig öffenbar sind.

5. Einwechselaggregat mit einem Kleinmengenschmiermittelspender gemäß Anspruch 1, **dadurch gekennzeichnet, dass** das Schmiermittel (1) ein Öl ist, dessen Viskosität zwischen 65 und 350 mm²/s liegt.

6. Einwechselaggregat mit einem Kleinmengenschmiermittelspender gemäß Anspruch 1, **dadurch gekennzeichnet, dass** das Gehäuse (71) des Kleinmengenschmiermittelspenders (70) eine Gemischaustrittsbohrung (78) hat, die unterhalb dem Flüssigkeitsniveaus (3) des Schmiermittelbehälters (72) angeordnet ist.

7. Einwechselaggregat mit einem Kleinmengenschmiermittelspender gemäß Anspruch 1, **dadurch gekennzeichnet, dass** der Schmiermittelbehälter (72) ein Entlüftungsventil (127) aufweist.

8. Einwechselaggregat mit einem Kleinmengenschmiermittelspender gemäß Anspruch 1, **dadurch gekennzeichnet, dass** das Gehäuse (71) einen Deckel (73) hat, der aus einem transparenten Kunststoff hergestellt ist.

9. Einwechselaggregat mit einem Kleinmengenschmiermittelspender gemäß Anspruch 1, **dadurch gekennzeichnet, dass** die Einwechseleinheit (9, 10) rotierende Werkzeugspindeln (51, 52) und/oder Werkzeugaufnahmen (61) hat, die gegenüber dem Gehäuse (11) des Aggregats (9, 10) mittels reibungsfreier Labyrinthdichtungen (66) abgedichtet sind.

## Claims

1. A substitution unit including an externally attached or integral small-quantity lubricant dispenser,
- said substitution unit (9, 10) requiring the supply of lubricant to at least one transmission (40, 55) and/or at least one working joint, **characterized in that**
- said small-quantity lubricant dispenser (70) comprising a lubricant reservoir (72) having at least one vent (air inlet and/or outlet opening) (111, 125) and at least one lubricant discharge opening (86);
- with at least one lubricant discharge opening (86) and at least one air inlet and/or outlet opening (111, 125) provided and adapted to be pneumatically opened under open-loop or closed-loop control for the discharge of lubricant (1); and
- a slide valve (131) disposed in a bore (181) located downstream of lubricant discharge opening (86) and having a recess (135) therein for the reception of a small quantity of oil.

2. Substitution unit including a small-quantity lubricant dispenser as claimed in claim 1, **characterized in that** recess (135) in slide valve (131) comprises one of an annular groove, a notch or a transverse bore.

3. Substitution unit including a small-quantity lubricant dispenser as claimed in claim 1, **characterized in that** recess (135) in slide valve (131) has a volume of 2 mm³ to 10 mm³.

4. Substitution unit including a small-quantity lubricant dispenser as claimed in claim 1, **characterized in that** vent (111) and lubricant discharge opening (86) of said small-quantity lubricant dispenser are adapted to open at least approximately at the same time.

5. Substitution unit including a small-quantity lubricant dispenser as claimed in claim 1, **characterized in that** lubricant (1) is an oil having a viscosity between 65 mm²/s and 350 mm²/s.

6. Substitution unit including a small-quantity lubricant dispenser as claimed in claim 1, **characterized in that** housing (71) of small-quantity lubricant dispenser (70) has therethrough a mixture discharge bore (78) disposed below fluid level (3) of lubricant reservoir (72).

7. Substitution unit including a small-quantity lubricant dispenser as claimed in claim 1, **characterized in that** lubricant reservoir (72) has a venting valve (127).

8. Substitution unit including a small-quantity lubricant dispenser as claimed in claim 1, **characterized in that** housing (71) has a lid (73) made of a transparent plastics material.

9. Substitution unit including a small-quantity lubricant dispenser as claimed in claim 1, **characterized in that** substitution unit (9, 10) comprises rotating tool spindles (51, 52) and/or tool holders (61) sealed against housing (11) of unit (9, 10) by means of friction-free labyrinth seals (66).

## Revendications

1. Organe interchangeable muni d'un distributeur de petites quantités de de lubrifiant, monté sur l'organe ou installé dans celui-ci,
- l'organe interchangeable (9, 10) nécessitant du lubrifiant pour au moins un mécanisme de transmission (40, 55) et/ou pour au moins une jointure, **caractérisé en ce que**
- le distributeur de petites quantités de lubrifiant (70) étant équipé d'un récipient de lubrifiant (72) avec au moins un orifice d'admission et/ou d'évacuation d'air (111, 125) et au moins une ouverture de distribution de lubrifiant (86),
- au moins une ouverture de distribution de lubrifiant (86) et au moins un orifice d'admission et/ou d'évacuation d'air (111, 125) étant commandés ou réglés pour être ouverts pneumatiquement pour la distribution de lubrifiant (1) et
- une valve coulissante (131) qui présente un creux (135) pour la réception d'une petite quantité d'huile étant placée dans une forure (181) disposée après l'ouverture de distribution de lubrifiant (86).

2. Organe interchangeable muni d'un distributeur de petites quantités de lubrifiant selon la revendication 1, **caractérisé en ce que** le creux (135) de la valve coulissante (131) étant une rainure circulaire ou une entaille ou une forure transversale.

3. Organe interchangeable muni d'un distributeur de petites quantités de lubrifiant selon la revendication 1, **caractérisé en ce que** le creux (135) de la valve coulissante (131) présente un volume allant de 2 jusqu'à 10 mm³.

4. Organe interchangeable muni d'un distributeur de petites quantités de lubrifiant selon la revendication 1, **caractérisé en ce que** l'orifice d'évacuation d'air (111) et l'ouverture de distribution de lubrifiant (86) dudistributeur de lubrifiant (70) peuvent être ouverts plus ou moins en même temps.

5. Organe interchangeable muni d'un distributeur de petites quantités de lubrifiant selon la revendication 1, **caractérisé en ce que** le lubrifiant (1) est une huile d'une viscosité entre 65 et 350 mm²/s.

6. Organe interchangeable muni d'un distributeur de petites quantités de lubrifiant selon la revendication 1, **caractérisé en ce que** le boîtier (71) du distributeur de lubrifiant (70) est pourvu d'un orifice de sortie de mélange (78) qui se trouve au-dessous du niveau de liquide (3) du récipient de lubrifiant (72).

7. Organe interchangeable muni d'un distributeur de petites quantités de lubrifiant selon la revendication 1, **caractérisé en ce que** le récipient de lubrifiant (72) est équipé d'une soupape d'évacuation (127).

8. Organe interchangeable muni d'un distributeur de petites quantités de lubrifiant selon la revendication 1, **caractérisé en ce que** le boîtier (71) dispose d'un couvercle (73) fabriqué en matière plastique transparente.

9. Organe interchangeable muni d'un distributeur de petites quantités de lubrifiant selon la revendication 1, **caractérisé en ce que** l'unité interchangeable (9, 10) est équipée de broches d'outil rotatives (51, 52) et/ou de portes-outils (61) dont l'étanchéité face au boîtier (11) de l'organe (9, 10) est assurée par des joints labyrinthe (66) exempts de friction.
